Europäisches Patentamt

European Patent Office

Office européen des brevets

(11) Veröffentlichungsnummer: **0 202 547**

**A2**

# (12) EUROPÄISCHE PATENTANMELDUNG

(21) Anmeldenummer: **86106284.2**

(22) Anmeldetag: **07.05.86**

(51) Int. Cl.4: **G01L 21/12**

(30) Priorität: **22.05.85 DE 3518388**

(43) Veröffentlichungstag der Anmeldung:
**26.11.86 Patentblatt 86/48**

(84) Benannte Vertragsstaaten:
**AT CH DE FR GB IT LI NL SE**

(71) Anmelder: **Leybold-Heraeus GmbH**
**Bonner Strasse 498 Postfach 51 07 60**
**D-5000 Köln 51(DE)**

(72) Erfinder: **Flosbach, Rudolf**
**Drecke 2**
**D-5272 Thier-Wipperfürth(DE)**
Erfinder: **Reich, Günter, Dr.**
**Vochemer Strasse 9**
**D-5000 Köln 51(DE)**

(74) Vertreter: **Leineweber, Jürgen, Dipl.-Phys.**
**Am Heidstamm 78 a**
**D-5000 Köln 40(DE)**

(54) **Messkopf.**

(57) Die Erfindung bezieht sich auf einen Meßkopf - (1) für ein Wärmeleitungs-Vakuummeter oder ein ähnliches Gerät mit einem in eine Brücke (15) eingeschalteten Meßwertaufnehmer (14, 31) und weiteren elektronischen Bauelementen sowie mit zwei Anschlüssen zur Verbindung des Meßkopfes mit einer außerhalb davon angeordneten Speisestromquelle; um bei Geräten dieser Art den Aufwand für die Spannungsversorgung zu reduzieren, wird vorgeschlagen, eine separate Leitung (23) für das in Form eines eingeprägten Stromes vorliegende Meßsignal und einen dritten Anschluß (24) zur Verbindung der Meßsignalleitung (23) mit einem ebenfalls außerhalb des Meßkopfes (1) angeordneten Anzeigegerät (26) vorzusehen.

FIG.1

Meßkopf

Die Erfindung bezieht sich auf einen Meßkopf für ein Wärmeleitungs-Vakuummeter oder ein ähnliches Gerät mit einem in einer Brücke eingeschalteten Meßwertaufnehmer und weiteren elektronischen Bauelementen sowie mit zwei Anschlüssen zur Verbindung des Meßkopfes mit einer außerhalb davon angeordneten Speisestromquelle. Die Erfindung ist anwendbar bei allen Geräten, die im Vakuum angeordnete, nach dem Prinzip der Wärmeleitungsempfindlichkeit arbeitende Meßwertaufnehmer aufweisen, also z. B. auch bei Wärmeleitungs-Detektoren für Gase.

Aus der DE-OS 31 30 817 ist ein Wärmeleitungsvakuummeter bekannt, das aus einem Meßkopf und einem Bedienungsgerät besteht. Im Bedienungsgerät sind eine Anzeigegerät und eine Speisestromquelle untergebracht. Im Meßkopf befinden sich der in eine Meßbrücke eingeschaltete temperaturempfindliche Meßwertaufnehmer sowie weitere elektronische Bauteile, unter anderem ein Spannungskonstanthalter sowie ein Verstärker für die Meßwertverarbeitung. Meßkopf und Bedienungsgerät sind über ein zweiadriges Kabel beliebiger Länge miteinander verbunden. Über dieses Kabel wird sowohl der Speisestrom als auch der Meßstrom übertragen.

Beim Einbau von Vakuummetern dieser Art in größere Anlagen ergibt sich der Nachteil, daß wegen der gemeinsamen Übertragung von Meßstrom und Speisestrom für jeden Meßkopf eine separate Spannungsversorgung zur Verfügung stehen muß. Dies gilt auch und gerade dann, wenn Wärmeleitungsvakuummeter mit unterschiedlichen Meßwertaufnehmern (Drahtwendel mit temperatu- rabhängigem Widerstand, Thermoelement oder dergleichen) verwendet werden. Insgesamt wird dadurch der Aufwand für die Spannungsversorgung von Vakuummetern um so höher, je mehr davon in einer Anlage benötigt werden.

Der vorliegenden Erfindung liegt die Aufgabe zugrunde, den Aufwand für die Spannungsversorgung für nach dem Prinzip der Wärmeleitungsempfindlichkeit arbeitende Geräte zu reduzieren.

Erfindungsgemäß wird diese Aufgabe bei einem Meßkopf der eingangs genannten Art dadurch gelöst, daß eine separate Leitung für das in Form eines eingeprägten Stromes vorliegende Meßsignal sowie ein dritter Anschluß zur Verbindung der Meßsignalleitung mit einem außerhalb des Meßkopfes angeordneten Anzeigegerät vorgesehen sind.

Ein oder mehrere in dieser Weise ausgebildete Wärmeleitungs-Vakuummeter oder ähnliche Geräte können an eine Spannungsquelle angeschlossen werden, die ohnehin in einer derartige Geräte benötigenden Anlage vorhanden ist. In der Regel handelt es sich dabei um Spannungsquellen für die elektrische Steuerung von Ventilen, die Versorgung von Zwischenverstärkern oder dergleichen. Da aus Sicherheitsgründen dabei mit Kleinspannungen gearbeitet wird, hat sich als üblicher Spannungswert einer derartigen Speisespannungsquelle 24 V ±10 % (Gleich-oder Wechselspannung) durchgesetzt.

Sind die im Meßkopf vorhandenen elektronischen Bauteile so bemessen, daß der gesamte durch den Meßkopf fließende Strom maximal 100 mA, vorzugsweise 12 bis 80 mA, beträgt und daß der aus dem Meßkopf über die dritte Anschlußbuchse fließende Meßstrom maximal 60 mA, vorzugsweise 4 bis 40 mA, beträgt, dann ergibt sich der Vorteil, daß mit einer Bürde für das Anzeigegerät gearbeitet werden kann, die einen relativ kleinen Widerstand (ca. 500 Ohm) hat. Diese Verhältnisse sind für nachgeordnete Geräte (z.B. eine nachgeordnete Verstärkung) besonders günstig, da ein Meßsignal mit einer ausreichenden Energie beziehungsweise Leistung zur Verfügung steht.

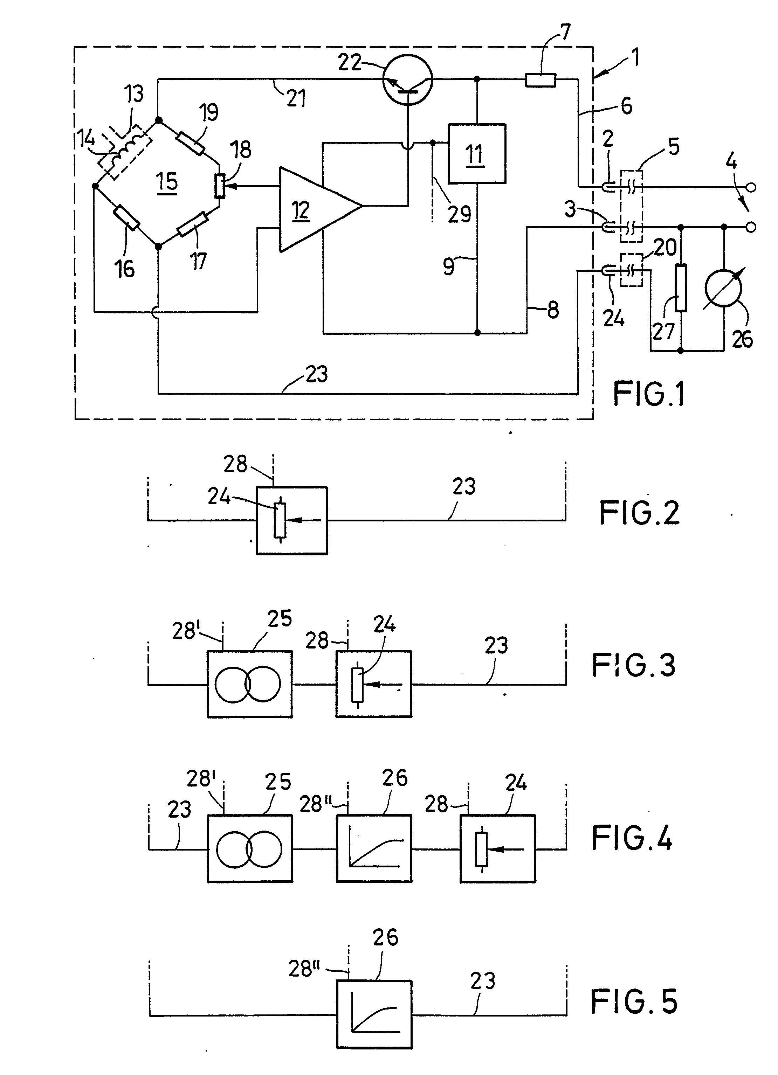

Weitere Vorteile und Einzelheiten der Erfindung sollen anhand von in den Figuren 1 bis 7 dargestellten Ausführungsbeispielen erläutert werden.

Figur 1 zeigt die in einem Meßkopf 1 nach der Erfindung enthaltene Schaltung bzw. elektronischen Bauteile. Mit 2 und 3 sind zwei Anschlußbuchsen bezeichnet. Diese dienen dem Anschluß der Spei- sespannungsquelle 4 mit einer Versorgungsspan- nung von zum Beispiel 5 bis 50 V, vorzugsweise 24 V (±10 %) über ein je nach Anwendungsfall unterschiedlich langes zweiadriges Kabel 5.

Innerhalb des Meßkopfes 1 sind an die Buchsen 2 und 3 die Leitungsabschnitte 6 (mit dem Widerstand 7) und 8 angeschlossen, welche mit dem Leitungsabschnitt 9 einen Stromkreis bilden, in den der Spannungskonstanthalter 11 eingeschaltet ist. Dieser versorgt den Verstärker 12 mit einer konstanten Versorgungsspannung.

Der Meßkopf 1 umfaßt weiterhin die Meßröhre 13, deren Innenraum mit einem nicht dargestellten Rezipienten verbunden ist, in dem der Druck zu messen, zu steuern oder zu überwachen ist. Innerhalb der Meßröhre 13 befindet sich der Meßdraht 14, der in die Wheatstone'sche Brücke 15 mit den weiteren Widerständen 16, 17, 18, 19 eingeschaltet ist. Widerstand 18 ist ein Abgleichwiderstand, dessen Funktion weiter unten noch beschrieben wird.

Die Figur 1 zeigt ein Ausführungsbeispiel für die Schaltung eines geregelten Pirani-Vakuummeters. Bei einem Vakuummeter dieser Art wird mit Hilfe des Verstärkers 12 und des im Leitungsabschnitt 21 angeordneten Transistors 22 dafür gesorgt, daß an der Brücke 15 stets eine die Brüke abgleichende Spannung anliegt. Die Eingänge des Verstärkers 12 sind dazu an zwei einander diagonal gegenüberliegenden Punkten der Brücke 15 angeschlossen, während an die beiden übrigen, ebenfalls einander gegenüberliegenden Punkte der Brücke 15 der Leitungsabschnitt 21 und ein weiterer Leitungsabschnitt 23 angeschlossen sind. Die Leitung 23 ist mit einer dritten Anschlußbuchse 24 am Meßkopf 1 verbunden, an die ein weiteres Kabel 20 angeschlossen ist und zum außerhalb des Meßkopfes 1 angeordneten Anzeigegerät 26 führt. Beim dargestellten Ausführungsbeispiel ist das Anzeigegerät ein Spannungsmeßgerät, das die über den Widerstand 27 abfallende Spannung mißt. Das Anzeigegerät 26 und der Widerstand 27 sind parallel zueinander an die Leitung 20 und an einen Pol der Gleichspannungsquelle 4 angeschlossen. Die Leitungen 5 beziehungsweise 20 können, wenn es zweckmäßig ist, zu einem dreiadrigen Kabel zusammengefaßt sein.

Beim Einsatz des dargestellten Vakuummeters fließt über den Leitungsabschnitt 23 ausschließlich ein dem Meßsignal entsprechender Strom, der über die Leitung 20 aus dem Meßkopf 1 hinausgeführt und mit Hilfe des Voltmeters 26 sowie der Bürde 27 angezeigt wird. Zweckmäßigerweise sind die im Meßkopf vorhandenen elektronischen Bauteile so bemessen, daß der gesamte durch den Meßkopf fließende Strom etwa 12 bis 80 mA beträgt, wobei der Meßstrom in der separaten Meßsignalleitung 23 zweckmäßigerweise etwa 4 bis 40 mA davon ausmacht. Bei diesen Stromwerten und einer Spannungsversorgung von 24 V kann mit einer geeigneten Bürde (ca. 500 Ohm bei 20 mA) gearbeitet werden, so daß ein Meßsignal ausreichender Leistung vorliegt. Der angezeigte Spannungswert liegt in der Größe von 2 bis 10 V.

Die Figuren 2 bis 5 zeigen jeweils nochmals den separaten Leitungsabschnitt 23, in den unterschiedliche Bauelemente eingeschaltet sind.

Beim Ausführungsbeispiel nach Figur 2 ist in den Abschnitt 23 ein Abgleichwiderstand 24 eingeschaltet. Der Abgleich des Gerätes mit Hilfe der Widerstände 18 (in der Meßbrücke 15) und 24 wird folgendermaßen durchgeführt: Zunächst wird bei Atmosphärendruck in der Meßröhre 13 der Widerstand 18 so eingestellt, daß der maximale Meßstrom in der Leitung 23 fließt. Danach erfolgt mit Hilfe des Widerstandes 24 ein Abgleich bei der Meßgröße 0, und zwar derart, daß in der Leitung 23 ein dem 0-Punkt entsprechender Strom fließt.

Figur 3 zeigt ein Ausführungsbeispiel, bei dem neben dem Abgleichwiderstand 24 ein Stromwandler 25 in die Meßleitung 23 eingeschaltet ist. Dieser ist zweckmäßig, wenn der Meßsignalstrom in der Leitung 23 verändert werden soll. Diese Veränderung ist erforderlich, wenn der Signalstrom unterschiedlichen, außerhalb des Meßkopfes angeordneten Anzeigegeräten angepaßt werden soll. Der wesentliche Vorteil besteht dann in der Austauschbarkeit des gesamten Meßkopfes.

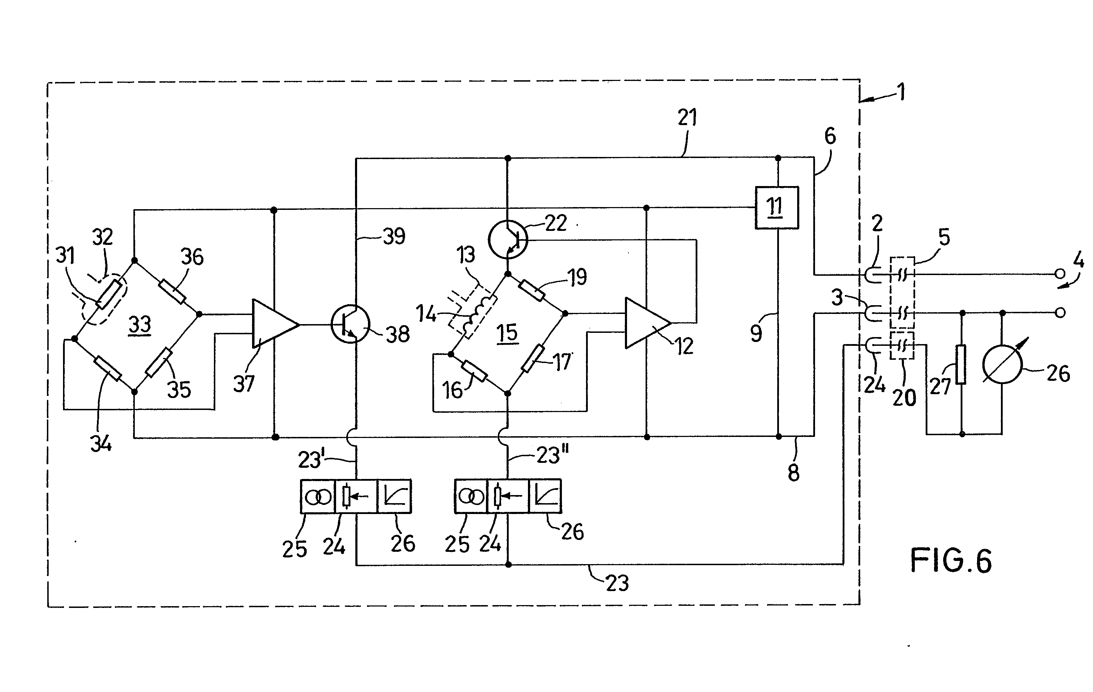

Beim Ausführungsbeispiel nach den Figuren 4 und 5 ist in der Meßsignalleitung 23 zusätzlich (Fig. 4) oder allein (Fig. 5) ein Verstärker 26 eingeschaltet, mit dem die Stromcharakteristik veränderbar ist. Diese Notwendigkeit ergibt sich zum Beispiel bei besonderen Meßwertaufnehmern, deren Kennlinie logarithmiert oder linearisiert werden soll. Weiterhin sind damit die Anzeigebereiche veränderbar.

Sind in der Leitung 23 sämtliche Schaltungen 23, 24 und 25 vorhanden, dann besteht der Vorteil, Meßsignale aller gewünschten beziehungsweise standardisierten Strombereiche erzeugen zu können.

Den lediglich als Block dargestellten und mit den zugehörigen Symbolen gekennzeichneten Schaltungen 24, 25 und 26 wird über die Leitungen 28, 28' und 28" die Versorgungsspannung zugeführt. Die Leitungen 28, 28' und 28" können zum Beispiel an die Spannungsversorgung 11 über die Leitung 29 (Fig. 1) angeschlossen sein.

Figur 6 zeigt ein Ausführungsbeispiel, bei dem im Meßkopf 1 zwei verschiedene Meßwertaufnehmer angeordnet sind. Zum einen handelt es sich um den Meßdraht 14, der in der bereits beschriebenen Weise gemeinsam mit den elektronischen Bauteilen ein geregeltes Pirani-Vakuummeter bildet. Zusätzlich ist ein piezoresistiver Meßwertaufnehmer 31 in einer Meßröhre 32 untergebracht und ebenfalls an den Rezipienten angeschlossen, in dem der Druck zu messen oder zu überwachen ist. Ein nach diesem Prinzip arbeitendes Vakuummeßgerät ist für einen Meßbereich besonders geeignet, der sich dem Meßbereich des Pirani-Vakuummeters zu hohen Drücken hin anschließt. Insgesamt ergibt sich dadurch ein Kobinationsdruckaufnehmer, der für einen Druckbereich von $10^{-3}$ mbar bis Atmosphärendruck und darüber hinaus geeignet ist.

Der piezoresistive Meßwertaufnehmer 31 ist in der Brücke 33 mit den weiteren Widerständen 34, 35, 36 angeordnet. An zwei einander diagonal gegenüberliegenden Punkten der Brücke 33 liegt die vom Spannungskonstanthalter 11 geregelte Spannung an. Die übrigen Punkte der Brücke 33 sind mit den Eingängen des Verstärkers 37 verbunden. Weiterhin ist der Transistor 38 vorgesehen, der im Leitungsabschnitt 39 eingeschaltet ist. Dieser Leitungsabschnitt 39 verbindet den Leitungsabschnitt 21 mit dem separaten Signalstromleitungsabschnitt 23.

Verstimmungen der Brücke 33 bewirken damit eine Veränderung des im Leitungsabschnitt 39 und damit auch im Leitungsabschnitt 23 fließenden Meßstromes. Im Leitungsabschnitt 23 addieren sich die Meßströme. Da sich der vom piezoresistiven Meßwertaufnehmer 31 gelieferte Meßstrom nur im Bereich relativ hoher Drücke (100 bis 1000 mbar und mehr) verändert, während sich der vom Meßdraht 14 gelieferte Meßstrom nur im Druckbereich. von $10^{-3}$ bis ca. 100 mbar verändert, ist es möglich, durch Addition der Meßströme den gewünschten großen Meßbereich abzudecken.

Die dem Abgleich und der Anpassung der Meßströme dienenden Schaltungen 24, 25 und/oder 26 sind jeweils in Leitungsabschnitten 23' und 23" untergebracht, in denen die jeweiligen Meßströme separat fließen. Die Stärke und/oder Charakteristik der Teilmeßströme können deshalb separat angepaßt werden

Die Meßwertaufnehmer 14 und 31 sind beim dargestellten Ausführungsbeispiel in separaten Meßröhren 13 und 32 untergebracht. Es besteht auch die Möglichkeit, für beide Meßwertaufnehmer nur eine Meßröhre vorzusehen.

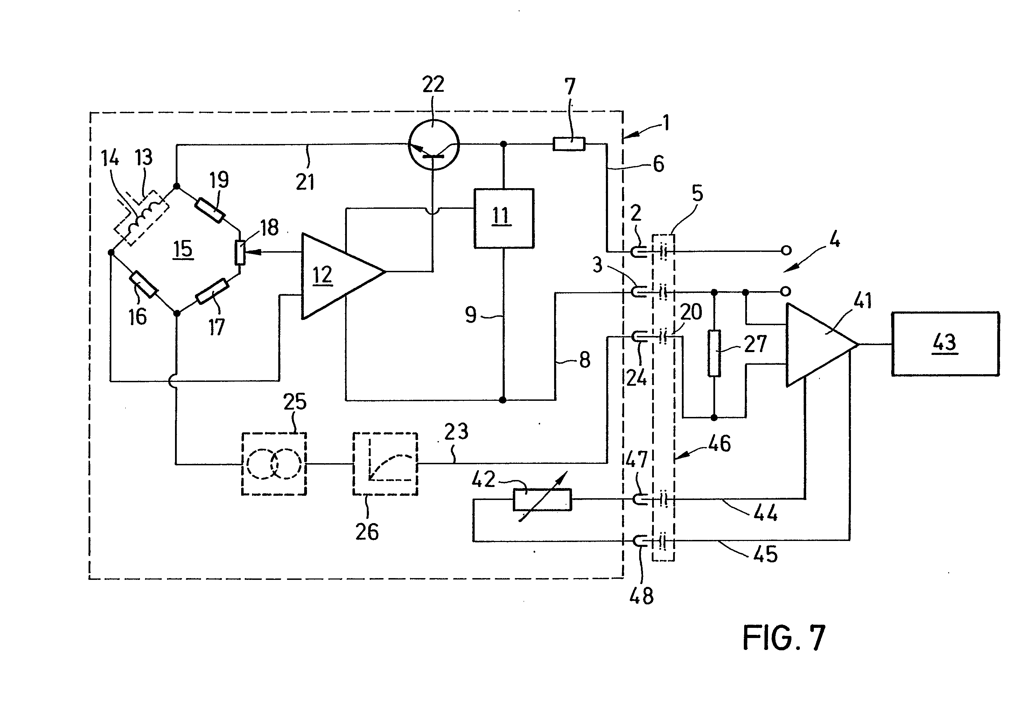

Beim Ausführungsbeispiel nach Figur 7 wird die über dem Widerstand 27 abfallende Spannung von einem Verstärker 41 abgenommen, dessen Offset mit Hilfe des Widerstandes 42 abgeglichen werden kann. Das verstärkte Signal wird der Anzeige 43 zugeführt.

Besonders zweckmäßig ist es, wenn der Widerstand 42 im Meßkopf 1 angeordnet ist. Bei dieser Anordnung kann der Abgleichwiderstand 24 (Figuren 2 bis 4) entfallen. Für jeden 0-Punkt der Druckanzeige kann der Abgleich am Meßkopf 1 mit Hilfe des Widerstandes 42 vorgenommen werden. Diese Lösung setzt zwei weitere Leitungen 44 und 45 zwischen der Anzeige und dem Meßkopf voraus, die über die Anschlüsse 47 und 48 mit dem Meßkopf 1 verbunden sind. Selbstverständlich ist es dabei möglich, alle Leitungen (5, 20, 44, 45) innerhalb eines mehradrigen Kabels 46 zusammenzufassen.

## Ansprüche

1. Meßkopf für ein Wärmeleitungs-Vakuummeter oder ein ähnliches Gerät mit einem in eine Brücke eingeschalteten Meßwertaufnehmer und weiteren elektronischen Bauelementen sowie mit zwei Anschlüssen zur Verbindung des Meßkopfes mit einer außerhalb davon angeordneten Speisestromquelle, **gekennzeichnet** durch eine separate Leitung (23) für das in Form eines eingeprägten Stromes vorliegende Meßsignal und einen dritten Anschluß (24) zur Verbindung der Meßsignalleitung (23) mit einem ebenfalls außerhalb des Meßkopfes (1) angeordneten Anzeigegerät (26).

2. Meßkopf nach Anspruch 1, **dadurch gekennzeichnet** , daß die Werte der elektronischen Bauteile so bemessen sind, daß der gesamte durch den Meßkopf fließende Strom maximal 100 mA, vorzugsweise 12 bis 80 mA, beträgt.

3. Meßkopf nach Anspruch 2, **dadurch gekennzeichnet,** daß der aus dem Meßkopf (1) über den dritten Anschluß (24) fließende Meßstrom maximal 60 mA, vorzugsweise 4 bis 40 mA, beträgt.

4. Meßkopf nach Anspruch 1, 2 oder 3, **dadurch gekennzeichnet,** daß in die Brückenschaltung - (15) und in die Meßsignalleitung (23) jeweils ein Abgleichwiderstand (18, 24) eingeschaltet ist.

5. Meßkopf nach Anspruch 4, **dadurch gekennzeichnet,** daß in die Meßsignalleitung (23) zusätzlich ein Stromwandler (25) eingeschaltet ist.

6. Meßkopf nach einem der vorhergehenden Ansprüche, **dadurch gekennzeichnet,** daß· in die Meßsignalleitung (23) ein die Änderung der Stromcharakteristik ermöglichender Verstärker (26) eingeschaltet ist.

7. Meßkopf nach einem der vorhergehenden Ansprüche, **dadurch gekennzeichnet,** daß zwei oder mehr unterschieliche Meßwertaufnehmer (14, 31) vorgesehen sind.

8. Meßkopf nach Anspruch 7, **dadurch gekennzeichnet,** daß im Meßkopf (1) ein temperaturabhängiges Widerstandselement (14) als Meßwertaufnehmer mit einem piezoresistiven Meßwertaufnehmer (31) kombiniert ist.

9. Meßkopf nach Anspruch 8, **dadurch gekennzeichnet** , daß die beiden Meßwertaufnehmer (14, 31) in einer gemeinsamen Meßröhre angeordnet sind.

10. Meßkopf nach einem der vorhergehenden Ansprüche, **dadurch gekennzeichnet**, daß dem Meßstrom eine Bürde (27) zugeordnet ist und daß die über der Bürde abfallende Spannung einem Verstärker (41) zugeführt wird, dessen Offset mit Hilfe eines Widerstandes (42) abgleichbar ist.

11. Meßkopf nach Anspruch 10, **dadurch gekennzeichnet**, daß sich der Widerstand (42) im Meßkopf befindet und über zwei weitere Leitungen (44, 45) mit dem Verstärker (41) verbunden ist.

FIG.1

FIG.2

FIG.3

FIG.4

FIG.5

FIG.6

0 202 547

FIG. 7

0 202 547